# FASCICULE DE BREVET EUROPEEN

(11) **EP 0 428 667 B1**
(45) Date de publication et mention de la délivrance du brevet: **04.05.1994**
(21) Numéro de dépôt: 90908238.0
(22) Date de dépôt: 15.05.1990
(51) Int. Cl.: H01J 31/50, A61B 6/00

(54) **ECRAN D'ENTREE DE TUBE INTENSIFICATEUR D'IMAGE RADIOLOGIQUE**
EINGANGSSCHIRM FÜR EINE RÖNTGENBILDVERSTÄRKERRÖHRE
INPUT SCREEN FOR RADIOLOGICAL IMAGE INTENSIFIER TUBE

(30) Priorité: 30.05.1989 FR 8907086
(43) Date de publication de la demande: 29.05.1991
(73) Titulaire: THOMSON TUBES ELECTRONIQUES, 92100 Boulogne-Billancourt (FR)
(72) Inventeur: RAVERDY, Yvan, F-38190 Bas-Bernin Cédex 67 A (FR); CHAREYRE, Francis, F-38120 S.-Egrève (FR); DE GROOT, Paul, F-38330 S.-Ismier (FR)
(74) Mandataire: Guérin, Michel
(86) Numéro de dépôt international: FR9000340
(87) Numéro de publication internationale: WO9015432

(56) Documents cités:
- FR-A- 2 623 659

## Description

La présente invention concerne un écran d'entrée de tube intensificateur d'image radiologique.

Les tubes intensificateurs d'image radiologique permettent de transformer une image radiologique en image visible, généralement pour assurer l'observation médicale.

Ces tubes comprennent un écran d'entrée, un système d'optique électronique, et un écran d'observation de l'image visible.

L'écran d'entrée comporte un scintillateur qui convertit des photons X incidents en photons visibles qui viennent ensuite exciter une photocathode, généralement constituée par un antimoniure alcalin, par exemple de l'antimoniure de potassium dopé au césium. La photocathode ainsi excitée génère un flux d'électrons.

Le flux d'électrons issu de la photocathode est ensuite transmis par le système d'optique électronique qui focalise les électrons et les dirige sur un écran d'observation constitué d'un luminophore qui émet alors une lumière visible. Cette lumière peut ensuite être traitée, par exemple, par un système de télévision, de cinéma ou de photographie.

Dans les réalisations les plus récentes l'écran d'entrée comporte un substrat d'aluminium recouvert par le scintillateur, lui-même recouvert par une couche conductrice de l'électricité et transparente, par exemple en oxyde d'indium. La photocathode est déposée sur cette couche transparente.

Les rayons X frappent l'écran d'entrée du côté du substrat d'aluminium et traversent ce substrat pour atteindre ensuite le matériau constituant le scintillateur.

Les photons lumineux produits par le scintillateur sont émis un peu dans toutes les directions. Mais, pour augmenter la résolution du tube, on choisit en général comme matériau scintillateur une substance telle que l'iodure de césium qui a la propriété de croître sous forme de cristaux perpendiculaires à la surface sur laquelle ils sont déposés. Les cristaux en aiguilles ainsi déposés tendent à guider la lumière perpendiculairement à la surface, ce qui est favorable à une bonne résolution d'image.

Toutefois, des photons lumineux sont également émis vers l'arrière, c'est-à-dire qu'fis repartent vers le côté d'arrivée des rayons X. Ces photons viennent frapper le substrat d'aluminium, avec une incidence qui est aléatoire. Ils sont réfléchis par le substrat d'aluminium vers l'avant, donc vers la photocathode mais le trajet de ces photons est tel qu'on aboutit à une perte de résolution : pour une même incidence de photon X, on peut aboutir à des créations d'électrons dans la photocathode en des points différents.

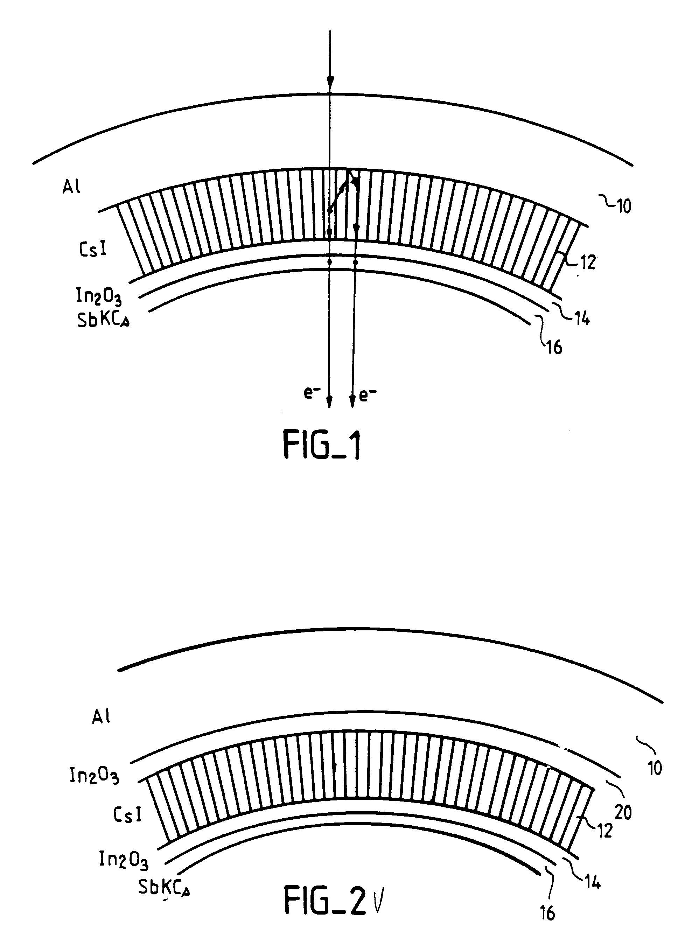

La figure 1 illustre cette perte de résolution en montrant côte à côte les trajets différents suivis par deux photons lumineux issus de l'impact d'un photon X sur le scintillateur, aboutissent à des formations d'électrons en des points différents de la photocathode. On reconnaît sur la figure 1, le substrat d'aluminium 10, en général galbé constituant la face d'entrée par laquelle arrivent les rayons X, le scintillateur 12 en iodure de césium dont les cristaux perpendiculaires à la surface tendent à canaliser les photons lumineux la sous-couche conductrice transparente 14 et la photocathode 16.

On pourrait envisager d'interposer entre le substrat d'aluminium 10 et la couche scintillatrice 12 une couche noire absorbant la lumière afin qu'il n'y ait pas de réflexions sur la surface d'aluminium et donc pas de création d'électrons dans la photocathode à partir de photons lumineux issus d'une telle réflexion.

Toutefois, cela est difficile car on ne sait pas bien mettre en place de telles couches : si cette couche absorbante est une couche métallique, son absorption est difficile à régler ; selon les conditions de dépôt, la couche métallique est soit absorbante soit réfléchissante. Si la couche absorbante est un verre noir (verre chargé de particules métalliques) elle est difficile à déposer; le fait que l'écran soit galbé ne facillte pas les choses. Si enfin la couche absorbante est une couche réalisée à partir de matières organiques, elle sera peu compatible avec les conditions de vide qui règnent à l'intérieur du tube.

Le document FR-A-2 623 659 décrit une couche absorbante constituée de nitrure de titane, de sulfure de cadmium ou de (Cu,PbI₂).

Selon l'invention, on propose de réaliser un écran d'entrée dans lequel on interpose entre le substrat et le scintillateur une couche mince antireflets transparente ou peu absorbante (aux longueurs d'onde émises par le scintillateur).

On s'est aperçu en effet qu'il était beaucoup plus facile de déposer et mettre en oeuvre, dans le contexte des tubes intensificateurs d'image, une couche transparente ou peu absorbante antireflets plutôt qu'une couche opaque.

Cette couche transparente antireflets sera une couche d'un matériau d'indice de réfraction supérieur à celui qui constitue le scintillateur. Son épaisseur sera choisie expérimentalement de manière à minimiser le coefficient de réflexion. Cette épaisseur est, de l'ordre de grandeur du dixième de la longueur d'onde émise par le scintillateur afin d'obtenir un effet anti-reflets : l'épaisseur pourra être de l'ordre de 400 à 6000 angströms si le scintillateur émet de la lumière visible (cas général).

Comme couche peu absorbante antireflets on choisira de préférence de l'oxyde d'indium, ou encore de l'oxyde d'antimoine, d'étain ou de bismuth, ou encore une combinaison de ces oxydes, telle que de l'oxyde d'indium-étain couramment désigné par l'appellation ITO. Ces oxydes sont de préférence dans l'état d'oxydation maximale (In₂O₃ pour l'indium, SnO₂ pour l'étain, Sb₂O₃ pour l'antimoine, Bi₂O₃ pour le bismuth. Ces matériaux ont entre autres l'avantage d'avoir un indice de réfraction élevé.

On peut envisager aussi que la couche est en réalité une superposition de plusieurs couches, en particulier une superposition avec diminution progressive (du substrat vers le scintillateur) de l'indice de réfraction.

Tous les matériaux indiqués ci-dessus présentent non seulement l'avantage d'une grande facilité de mise en oeuvre mais aussi d'une bonne compatibilité chimique avec l'iodure de césium et ils améliorent l'adhérence de la couche scintillatrice sur le substrat.

D'autres caractéristiques et avantages de l'invention apparaîtront à la lecture de la description détaillée qui suit et qui est faite en référence aux dessins annexés dans lesquels :
- la figure 1 déjà décrite représente l'art antérieur avec l'explication de la perte de résolution due aux photons émis vers l'arrière et réfléchis sur le substrat d'aluminium.
- la figure 2 représente un schéma de constitution de l'écran d'entrée d'un tube intensificateur d'image selon l'invention.

Sur la figure 2 on a représenté la constitution d'écran selon l'invention.

On part d'un substrat 10 qui est de préférence une feuille d'aluminium en forme de paraboloïde de révolution. Le substrat peut être aussi un alliage à base d'aluminium. Son épaisseur est de l'ordre du demi-millimètre. Pour cette épaisseur il possède une bonne transparence aux rayons X (d'énergie de l'ordre de 60 keV en radiologie médicale classique). On prévoit de préférence que la surface intérieure du substrat est satinée par trempage dans la soude.

On dépose selon l'invention sur ce substrat une couche mince antireflets transparente 20. Elle est de préférence en oxyde d'indium In₂O₃ et elle peut avoir une épaisseur de préférence comprise entre 400 et 2000 angströms.

Le dépôt est fait par évaporation d'oxyde sous vide, ou encore par pulvérisation cathodique réactive à partir d'oxyde. Mais on peut aussi faire une évaporation ou pulvérisation de métal suivie d'une oxydation thermique (à des températures de quelques centaines de degrés : dès 350°C on obtient une oxydation de l'indium). Ces techniques sont classiques et sont d'ailleurs utilisées pour la couche 14 de la figure 1.

La couche antireflets ainsi déposée adhère bien au substrat d'aluminium.

On dépose ensuite sur la couche antireflets une couche scintillatrice 12 de quelques centaines de microns d'épaisseur, par exemple 400 microns. Cette couche sera réalisée à partir d'un halogénure alcalin, l'iodure de césium (dopé au sodium ou au thalium) étant actuellement le plus couramment utilisé dans ce type d'application.

L'iodure de césium émet par exemple à une longueur d'onde d'environ 4 300 angströms (lumière bleue), cette longueur d'onde pouvant varier avec le dopage de l'iodure. Son indice de réfraction est d'environ 1,7.

Pour jouer un rôle de couche antireflets, on notera que la couche transparente ou peu absorbante 20 doit avoir un indice de réfraction supérieur à celui de la couche scintillatrice. C'est bien le cas si la couche transparente est en oxyde d'indium (indice supérieur à 2) et si le scintillateur est en iodure de césium.

En ce qui concerne l'épaisseur à donner à la couche antireflets, on peut dire qu'elle est théoriquement calculable en fonction des rapports d'indices de réfraction (entre son indice et celui du scintillateur), des longueurs d'onde lumineuses émises, des angles de réflexions qu'on veut particulièrement éliminer. Mais en pratique ce calcul est très difficile compte tenu du fait que la surface de l'aluminium n'est pas lisse mais a une texture satinée et du fait que le dépôt d'iodure de césium est irrégulier. Par conséquent, c'est par des expérimentations qu'on définira l'épaisseur optimale à donner à la couche 20 pour assurer le rôle de couche antireflets qu'on désire. Cette épaisseur sera de l'ordre de grandeur des longueurs d'onde émises par le scintillateur, par exemple comprise entre 400 et 2 000 angströms pour un scintillateur classique à iodure de césium émettant une lumière bleue.

L'adhérence de l'iodure de césium ou des autres halogénures alcalins sur la couche antireflets est excellente. Les contraintes de dilatation différentielle entre l'aluminium, l'oxyde d'indium et l'iodure de césium sont tout à fait acceptables et la compatibilité chimique entre l'iodure de césium et la couche antireflets est également très bonne. Ce fait est important car l'iodure de césium est un corps très réactif.

Après formation de la couche scintillatrice 12, on dépose une couche transparente conductrice 14 dont le rôle est notamment d'assurer uniformément la mise à la masse de la photocathode. Cette couche est reliée à l'extérieur à une masse. Elle est transparente pour ne pas gêner la transmission de photons lumineux du scintillateur 12 vers la photocathode. Elle est de préférence en oxyde d'indium. Elle pourrait être aussi un autre oxyde semiconducteur tel que de l'oxyde d'étain ou d'antimoine ou une combinaison telle que de l'ITO. Elle a une épaisseur de quelques centaines d'angströms.

On dépose ensuite sur cette couche transparente une couche de photocathode 16, en général constituée par un antimoniure alcalin tel que SbKCs. La couche est très mince (environ 150 à 200 angströms).

## Revendications

1. Ecran d'entrée pour tube intensificateur d'images radiologiques comprenant un support (10) portant une couche scintillatrice (12), caractérisé en ce qu'une couche mince antireflets (20), transparente ou peu absorbante à la longueur d'onde émise par la couche scintillatrice est interposée entre le support et la couche scintillatrice.

2. Ecran d'entrée selon la revendication 1, caractérisé en ce que la couche transparente antireflets (20) est en un matériau d'indice de réfraction supérieur à celui de la couche scintillatrice.

3. Ecran d'entrée selon l'une des revendications 1 et 2, caractérisé en ce que la couche antireflets (20) est en oxyde d'indium.

4. Ecran d'entrée selon l'une des revendications 1 et 2, caractérisé en ce que la couche antireflets est en oxyde d'antimoine ou d'étain ou de bismuth.

5. Ecran d'entrée selon l'une des revendications 1 et 2, caractérisé en ce que la couche antireflets est une combinaison d'oxydes pris parmi les oxydes d'indium, d'antimoine d'étain et de bismuth, notamment de l'oxyde d'indium-étain.

6. Ecran d'entrée selon l'une des revendications 1,2 et 5 caractérisé en ce que la couche antireflets est une superposition de couches différentes.

7. Ecran d'entrée selon l'une des revendications 1 à 6 caractérisé en ce que la couche scintillatrice est à base d'iodure de césium.

8. Ecran d'entrée selon l'une des revendications 1 à 7 en ce que le support est en aluminium ou en alliage à base d'aluminium.

9. Ecran d'entrée selon l'une des revendications 1 à 8 caractérisé en ce qu'une couche transparente conductrice (14) est déposée sur la couche scintillatrice et une couche de photocathode (16) est déposée sur cette couche transparente conductrice.

## Claims

1. An input screen for a radiological image intensifier tube, comprising a support (10) bearing a scintillating layer (12), characterized in that a thin antireflection layer (20), which is transparent to the wave length emitted by the scintillating layer or has a low absorbency with respect thereto, is interposed between the support and the scintillating layer.

2. The input screen as claimed in claim 1, characterized in that the antireflection layer (20) is made of a material with an index of refraction above that of the scintillating layer.

3. The input screen as claimed in claim 1 or in claim 2, characterized in that the antireflection layer (20) is made of indium oxide.

4. The input screen as claimed in claim 1 or in claim 2, characterized in that the antireflection layer is an oxide of antimony, of tin or of bismuth.

5. The input screen as claimed in claim 1 or in claim 2, characterized in that the antireflection layer is made of a combination of oxides selected from the group including the oxides of indium, of antimony, of tin and of bismuth and more especially indium tin oxide.

6. The input screen as claimed in any one of the claims 1, 2 and 5, characterized in that the antireflection layer comprises different superposed layers.

7. The input screen as claimed in any one of the claims 1 through 6, characterized in that the scintillating layer is on the basis of cesium iodide.

8. The input screen as claimed in any one of the claims 1 through 7, characterized in that the support is made of aluminum or of an aluminum based alloy.

9. The input screen as claimed in any one of the claims 1 through 8, characterized in that a transparant conductive layer (14) is deposited on the scintillating layer and a photocathode layer (16) is deposited on the said transparent conductive layer.

## Patentansprüche

1. Eingangsschirm für eine Röntgenbildverstärkerröhre mit einem Träger (10), der eine Szintillatorschicht (12) trägt, dadurch gekennzeichnet, daß eine dünne Antireflexschicht (20), die gegenüber der von der Szintillatorschicht emittierten Wellenlänge transparent oder schwach absorbierend ist, zwischen dem Träger und der Szintillatorschicht liegt.

2. Eingangsschirm nach Anspruch 1, dadurch gekennzeichnet, daß die transparente Antireflexschicht (20) aus einem Material mit einer Brechungszahl besteht, die über derjenigen der Szintillatorschicht liegt.

3. Eingangsschirm nach einem der Ansprüche 1 und 2, dadurch gekennzeichnet, daß die Antireflexschicht (20) aus Indiumoxid besteht.

4. Eingangsschirm nach einem der Ansprüche 1 und 2, dadurch gekennzeichnet, daß die Antireflexschicht aus Antimon-, Zinn- oder Wismutoxid besteht.

5. Eingangsschirm nach einem der Ansprüche 1 und 2, dadurch gekennzeichnet, daß die Antireflexschicht aus einer Kombination von Oxiden aus der Gruppe der Oxide von Indium, Antimon, Zinn und Wismut, insbesondere aus Indiumzinnoxid besteht.

6. Eingangsschirm nach einem der Ansprüche 1, 2 und 5, dadurch gekennzeichnet, daß die Antireflexschicht eine Übereinanderlagerung von verschiedenen Schichten ist.

7. Eingangsschirm nach einem der Ansprüche 1 bis 6, dadurch gekennzeichnet, daß die Szintillatorschicht auf der Basis von Cäsiumiodid gebildet ist.

8. Eingangsschirm nach einem der Ansprüche 1 bis 7, dadurch gekennzeichnet, daß der Träger aus Aluminium oder einer Legierung auf der Basis von Aluminium besteht.

9. Eingangsschirm nach einem der Ansprüche 1 bis 8, dadurch gekennzeichnet, daß eine leitende, transparente Schicht (14) auf der Szintillatorschicht und eine Photokathodenschicht (16) auf dieser leitenden, transparenten Schicht aufgebracht ist.
